Europäisches Patentamt

European Patent Office

Office européen des brevets

(19)

(11) Numéro de publication: **0 225 986 B1**

## FASCICULE DE BREVET EUROPEEN

(12)

(45) Date de publication de fascicule du brevet:
21.11.91

(51) Int. Cl.5: **G02B 6/44**, G02B 6/40

(21) Numéro de dépôt: 86114214.9

(22) Date de dépôt: 14.10.86

(54) **Tête d'éclatement d'un câble à fibres optiques.**

(30) Priorité: 16.10.85 FR 8515342

(43) Date de publication de la demande:
24.06.87 Bulletin 87/26

(45) Mention de la délivrance du brevet:
21.11.91 Bulletin 91/47

(84) Etats contractants désignés:
BE CH DE FR GB IT LI NL SE

(56) Documents cités:
EP-A- 0 017 319
EP-A- 0 063 506
GB-A- 1 470 890

PATENT ABSTRACTS OF JAPAN, vol. 8, no. 153 (P-287)[1590], 17 juillet 1984; & JP-A-59 50 413

PATENT ABSTRACTS OF JAPAN, vol. 6, no. 141 (P-131)[1019], 30 juillet 1982; & JP-A-57 62 007

(73) Titulaire: **ALCATEL CABLE**
**30, rue des Chasses**
**F-92111 Clichy Cédex(FR)**

(72) Inventeur: **Le Maitre, Patrick**
**5 Allée Jean de Joinville La Grange Saint Louis**
**F-78260 Acheres(FR)**
Inventeur: **Resebeut, Jean-Claude**
**9bis Cité des Beaux Vents**
**F-95310 Saint Ouen l'Aumone(FR)**

(74) Mandataire: **Weinmiller, Jürgen et al**
**Lennéstrasse 9 Postfach 24**
**W-8133 Feldafing(DE)**

## Description

La présente invention concerne une tête d'éclatement d'un câble à fibres optiques, le câble étant constitué d'un jonc central rainuré dont chaque rainure renferme un faisceau de fibres optiques.

Le raccordement de l'extrémité d'un câble à fibres optiques à un autre câble ou à un équipement, exige l'éclatement de ce câble en fibres optiques unitaires, la protection de chaque fibre unitaire au moyen d'un tube souple, enfin l'identification de chaque fibre par l'utilisation de tubes colorés.

On connaît des têtes d'éclatement qui permettent l'éclatement d'un câble en faisceaux de fibres, chaque faisceau étant logé dans un tube souple de protection, puis d'autres têtes qui permettent l'éclatement d'un faisceau en fibres optiques unitaires logées chacune dans un tube souple de protection. L'éclatement total d'un câble nécessite donc l'emploi de deux têtes d'éclatement différentes.

La présente invention a pour but d'assurer l'éclatement direct d'un câble à fibres optiques en fibres optiques unitaires.

La présente invention permet également une grande souplesse d'utlisation au cours des différentes interventions de réparation et l'emploi de composants communs à plusieurs dimensions de têtes ou à plusieurs configurations de câbles, les autres composants étant adaptés à chaque dimension de tête ou à chaque configuration de câble.

La présente invention a pour objet une tête d'éclatement d'un câble à fibres optiques en fibres optiques unitaires, adaptée à l'éclatement d'un câble du type constitue d'un jonc central rainuré dont chaque rainure renferme un faisceau de fibres optiques, ladite tête étant caractérisée en ce qu'elle est constituée par une pièce-support munie d'une couronne comportant à sa périphérie des alvéoles ouvertes vers l'extérieur et recevant chacune un barillet cylindrique, le nombre desdits alvéoles étant au moins égal au nombre de faisceaux de fibres constituant le câble, chaque barillet comportant un nombre d'orifices axiaux au moins égal au nombre de fibres optiques constituant un même faisceau, et chaque orifice axial traversé par une fibre étant prolongé par un tube souple de protection enveloppant ladite fibre optique.

La tête d'éclatement comporte, en outre, l'une des caractéristiques suivantes :

- chaque alvéole reçoit un plot de centrage qui s'engage dans un orifice correspondant d'un barillet cylindrique,
- elle est recouverte par deux demi-coquilles, au moins une de ces coquilles comportant un bossage permettant son blocage en rotation.
- la couronne de la pièce-support est prolongée axialement par un tube de maintien du câble, ce tube étant traversé radialement par une vis pointeau qui bloque le câble dans sa position axiale.

EP-A-0 017 319 divulgue un dispositif de terminaison de câble optique adapté pour réaliser l'épanouissement d'un câble comportant quatre fibres optiques logées chacune dans un tube, ledit dispositif comprenant une couronne traversée à sa péripherie par quatre manchons percés chacun d'un orifice axial unique pour le passage d'une fibre correspondante.

EP-A-0 063 506 divulgue un dispositif de protection de fibres optiques dégagées à l'extrémité d'un câble du type constitué d'un jonc rainuré dont chaque rainure renferme une fibre optique unique, ledit dispositif de protection comportant un manchon emmanché en bout du câble, et ledit manchon étant percé à sa périphérie d'une pluralité d'ouvertures prolongées par des gaines souples destinées à recevoir chacune une fibre du câble.

Il est décrit ci-après, à titre d'exemple et en référence aux dessins annexés, une tête d'éclatement d'un câble à fibres optiques comportant dix rainures renfermant chacune un faisceau de quatre fibres optiques.

La figure 1 montre une coupe longitudinale de la tête complète selon I de la figure 2.

La figure 2 montre la tête vue selon II de la figure 1.

La figure 3 montre une vue de face d'un barillet.

La figure 4 montre une coupe de ce barillet selon IV de la figure 3.

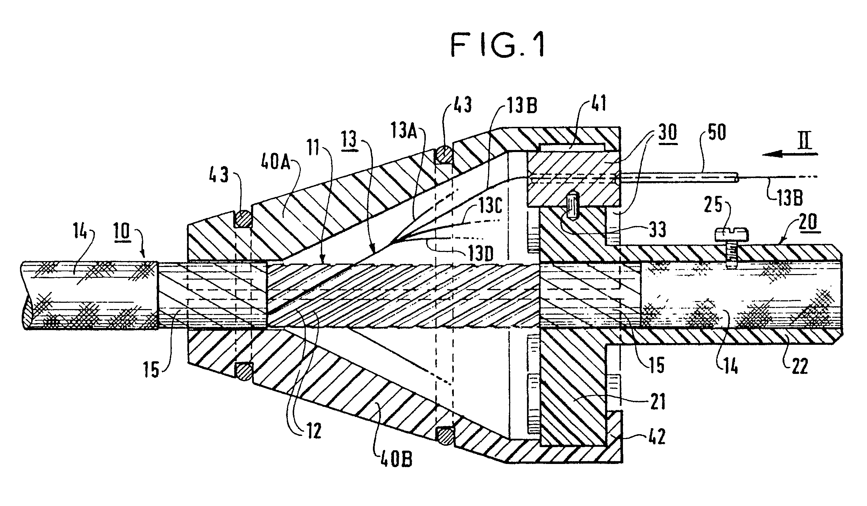

Dans la figure 1, une tête complète est représentée, le montage de cette tête sur le câble étant terminé.

On y voit un câble 10, une tête de pose comportant ses trois éléments principaux : une pièce-support 20, des barillets 30 et deux coquilles 40, et enfin des tubes souples de protection 50. Le câble 10 est constitue d'un jonc 11 muni de dix rainures hélicoïcales 12 (ces rainures pouvant être à pas alterné), chaque rainure recevant un faisceau 13 de fibres optiques. Ce câble reçoit par fabrication, une protection 14, mais cette protection est supprimée sur une longueur sensiblement égale à la longueur de la tête, et deux guipages 15 maintiennent la protection 14 à chaque bord de la fenêtre ainsi créée.

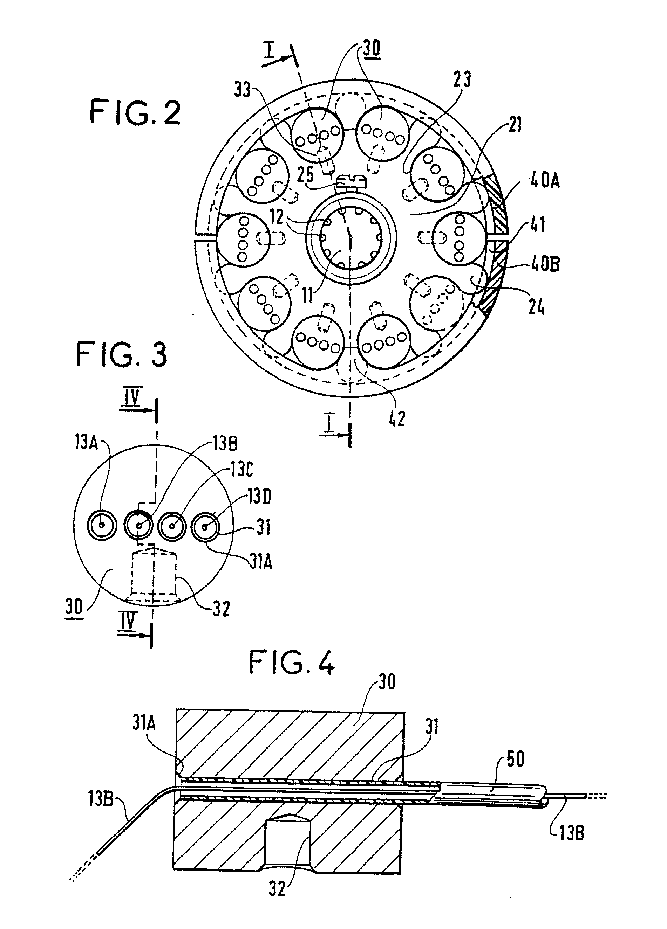

La pièce support 20 est composée de deux parties principales, une couronne 21 munie d'alvéoles 23 mieux visibles en figure 2, et un tube de maintien 22 dans lequel est enfilé le câble 10, ce tube reçoit une vis-pointeau 25 qui bloque le câble axialement.

Chaque alvéole 23 reçoit un barillet 30 et celui-ci est maintenu en rotation par un plot 33.

Chaque barillet 30 reçoit à son entrée un faisceau 13 constitué de quatre fibres 13A, 13B, 13C, 13D et à sa sortie, quatre tubes souples de protection 50 renfermant chacun une seule fibre optique. A cette sortie, seuls la fibre optique 13B et son tube 50 ont été représentés.

Cette tête est recouverte de deux demi-coquilles 40 prenant chacune appui, à une extrémité sur un guipage 15, et à l'autre extrémité, sur les barillets 30. Ces deux demi-coquilles 40 sont maintenues par deux colliers 43. Elles comportent chacune une saignée 41 qui permet le logement de la périphérie de la couronne 21.

La figure 2 montre bien la forme de la couronne 21 munie de dix alvéolés 23, deux alvéoles 23 étant raccordées par des formes arrondies 24.

Les alvéoles 23 et les raccordements arrondis 24 donnent à cette couronne une forme de "marguerite" dont deux "pétales" permettent, par leur souplesse, un encliquetage d'un barillet 30 dans une alvéole 23.

Cette figure 2 montre également les deux demi-coquilles 40 qui prennent appui sur les barillets 30, la coupe partielle montrant la mise en place de la périphérie de la couronne 21 dans la saignée 41 des demi-coquilles 40. Ces demi-coquilles 40 comportent chacune un bossage 42 (visible également en figure 1) qui est ajusté entre deux barillets 30, ces bossages assurant le blocage en rotation des demi-coquilles.

La figure 3 montre de manière détaillée un barillet 30 comportant quatre orifices 31 muni chacun d'un chanfrein 31A. Ces quatre orifices renferment chacun une fibre optique c'est-à-dire les fibres 13A, 13B, 13C, 13D du faisceau 13.

Ce barillet comporte également un trou borgne 32 par la mise en place d'un plot de centrage 33. On comprend bien que chaque barillet peut comporter sur toute sa longueur d'autres orifices 31 en dehors de la surface occupée par le trou borgne 32, pour recevoir d'autres fibres si le faisceau en comporte plus de quatre.

La figure 4 montre la position d'un tube souple 50 à l'intérieur d'un orifice 31 d'un barillet 30. Ce tube 50 est introduit sur pratiquement toute la longueur de l'orifice et il peut être maintenu par collage par exemple.

On remarquera dans la figure 1, que chaque barillet est plus long que la couronne n'est e'paisse, et qu'il dépasse légèrement à chaque extrémité afin de faciliter l'extraction de chaque barillet par un outil approprié.

Une opération d'éclatement s'effectue de la manière suivante :

- On prépare le câble à éclater en éliminant la protection 14 sur une longueur correspondant sensiblement à la longueur de la tête et à une distance de l'extrémité du câble correspondant à la longueur de fibres que l'on désire introduire dans les tubes souples de protection.
- On met en place les deux guipages 15 à chaque bord de la fenêtre ainsi pratiquée pour éviter une détérioration de la protection 14.
- On enfile la pièce-support 20 le long du câble jusqu'à la fenêtre.
- On repose la tête sur un support approprié, non représenté, et par une opération préalable, on enfile tous les tubes 50 dans les barillets 30.
- On extrait les fibres d'un même faisceau, une à une, en lovant chaque fibre dans un récipient annexe et on enfile chacune de ses fibres dans un tube repéré par un code couleur.
- On met en place le barillet ainsi rempli dans une alvéole, par encliquetage.
- On renouvelle ces deux dernières opérations pour chaque faisceau.
- On serre la vis-pointeau 25 qui maintient la pièce-support 20 sur la câble 10.
- On coupe le câble au ras du tube de maintien 22.
- On met en place les deux demi-coquilles 40, puis on les solidarise par les deux colliers 43.

**Revendications**

1. Tête d'éclatement d'un câble à fibres optiques en fibres optiques unitaires, adaptée à l'éclatement d'un câble (10) du type constitué d'un jonc central (11) rainuré dont chaque rainure (12) renferme un faisceau (13) de fibres optiques (13A,13B,13C,13D), ladite tête étant, caractérisée en ce qu'elle est constituée par une pièce-support (20) munie d'une couronne (21) comportant à sa périphérie des alvéoles (23) ouvertes vers l'extérieur et recevant chacune un barillet cylindrique (30), le nombre desdites alvéoles (23) étant au moins égal au nombre de faisceaux (13) de fibres constituant le câble, chaque barillet comportant un nombre d'orifices axiaux (31) au moins égal au nombre de fibres optiques constituant un même faisceau, et chaque orifice axial (31) traversé par une fibre optique étant prolongé par un tube souple de protection (50) enveloppant ladite fibre optique.

2. Tête d'éclatement selon la revendication 1, caractérisée en ce que chaque alvéole (23) reçoit un plot de centrage (33) qui s'engage dans un orifice (32) correspondant d'un barillet cylindrique (30).

3. Tête d'éclatement selon l'une des revendications 1 ou 2, caractérisée en ce qu'elle est recouverte par deux demi-coquilles (40), au moins une de ces coquilles comportant un bossage (42) permettant son blocage en rotation.

4. Tête d'éclatement selon l'une des revendications précédentes, caractérisée en ce que la couronne (21) de la pièce-support (20) est prolongée axialement par un tube de maintien (22) du câble, ce tube (22) étant traversé radialement par une vis pointeau (25) qui bloque le câble (10) dans sa position axiale.

## Claims

1. A spreader head for an optical fiber cable made of unitary optical fibers, adapted to the spreading of a cable (10) which is constituted of a central grooved core (11), with each groove (12) receiving a bundle (13) of optical fibers (13A, 13B, 13C, 13D), said head being characterized in that it is constituted by a support part (20) having a flange (21) comprising outwardly open cells (23) disposed in its periphery and each receiving a cylinder (30), the number of said cells being at least equal to the number of fiber bundles (13) constituting the cable, each cylinder (30) including at least as many axial orifices (31) as there are optical fibers in a single bundle of optical fibers, and each axial orifice (31) which is traversed by an optical fiber being extended by a flexible protective tube (50), which encloses the corresponding optical fiber.

2. A spreader head according to claim 1, characterized in that each cell (23) receives a centering peg (33) which engages into a corresponding orifice (32) in the cylinder (30).

3. A spreader head according to claim 1 or 2, characterized in that said head is covered by two half-shells (40), at least one of said half-shells including a projection (42) for preventing it from rotating.

4. A spreader head according to any preceding claim, characterized in that the flange (21) of the support part (20) extends axially in the form of a cable-holding tube (22), said tube (22) having a sharpened screw (25) passing radially therethrough to lock the cable (10) in its axial position.

## Patentansprüche

1. Spleißkopf für ein Lichtleitfaserkabel aus optischen Einzelfasern für das Aufspleißen eines Kabels (10), das einen gerillten zentralen Strang (11) aufweist, dessen Rillen (12) jeweils ein Bündel (13) von Lichtleitfasern (13A, 13B, 13C, 13D) aufnehmen, dadurch gekennzeichnet, daß der Kopf ein Halterbauteil (20) mit einem Flansch (21) aufweist, welcher periphere Zellen (23) aufweist, die nach außen hin offen sind und je einen Zylinder (30) aufnehmen, wobei die Anzahl der Zellen (23) mindestens der Anzahl der das Kabel bildenden Faserbündel (13) entspricht und jeder Zylinder eine Anzahl axialer Öffnungen (31) aufweist, die mindestens der Anzahl der ein Bündel bildenden Lichtleitfasern entspricht und jede von einer Lichtleitfaser durchdrungene axiale Öffnung (31) durch ein flexibles Schutzrohr (50) verlängert wird, das die Lichtleitfaser umhüllt.

2. Spleißkopf nach Anspruch 1, dadurch gekennzeichnet, daß in jede Zelle (23) ein Zentrierstift (33) eindringt, der sich in eine entsprechende Öffnung (32) des jeweiligen Zylinders (30) einfügt.

3. Spleißkopf nach Anspruch 1 oder 2, dadurch gekennzeichnet, daß er von zwei Halbschalen (40) bedeckt wird, wobei mindestens eine der Schalen einen Vorsprung (42) aufweist, der sie gegen Drehung sichert.

4. Spleißkopf nach einem der vorhergehenden Ansprüche, dadurch gekennzeichnet, daß der Flansch (21) des Haltebauteils (20) axial durch ein Halterohr (22) für das Kabel verlängert wird, wobei das Rohr (22) radial von einer Klemmschraube (25) durchdrungen wird, die das Kabel (10) in seiner Axiallage arretiert.

FIG.1

# FIG. 2

# FIG. 3

# FIG. 4